# EUROPÄISCHE PATENTSCHRIFT

(11) **EP 3 305 100 B1**
(45) Veröffentlichungstag und Bekanntmachung des Hinweises auf die Patenterteilung: **19.05.2021**
(21) Anmeldenummer: 17192616.5
(22) Anmeldetag: 22.09.2017
(51) Int. Cl.: A24C 5/35

(54) **VORRICHTUNG UND VERFAHREN ZUM ZUSAMMENFÜHREN VON ZWEI MASSENSTRÖMEN AUS STABFÖRMIGEN ARTIKELN DER TABAKVERARBEITENDEN INDUSTRIE**
DEVICE AND METHOD FOR MERGING TWO MASS FLOWS MADE FROM ROD SHAPED PRODUCTS IN THE TOBACCO INDUSTRY
DISPOSITIF ET PROCÉDÉ POUR RÉUNIR DEUX FLUX D'ARTICLES EN FORME DE TIGE DANS L'INDUSTRIE DU TABAC

(30) Priorität: 07.10.2016 DE 102016119067
(43) Veröffentlichungstag der Anmeldung: 11.04.2018
(73) Patentinhaber: Hauni Maschinenbau GmbH, 21033 Hamburg (DE)
(72) Erfinder: HARTMANN, Florian, 21502 Geesthacht (DE); HOYER, Viktoria, 21502 Geesthacht (DE); ROOSE, Jan, 22605 Hamburg (DE)
(74) Vertreter: Müller Verweyen

(56) Entgegenhaltungen:
- EP-A2- 2 220 950
- DE-A1- 3 512 521
- DE-A1-102005 034 246
- GB-A- 1 407 458
- GB-A- 2 097 353
- GB-A- 2 271 922
- US-A1- 2006 237 336

## Beschreibung

Die vorliegende Erfindung betrifft eine Vorrichtung und ein Verfahren zum Zusammenführen von zwei Massenströmen aus stabförmigen Artikeln der tabakverarbeitenden Industrie mit den Merkmalen des Oberbegriffs von Anspruch 1 und den Merkmalen von Anspruch 6.

Eine solche Vorrichtung ist z.B. aus der DE 40 14 713 A1 bekannt. Die Vorrichtung bildet ein Fördersystem, welches zum Zusammenführen von verschiedenen Massenströmen wie z.B. eines Massenstromes von einer Herstellungseinrichtung und eines Massenstromes aus einem Speicher vorgesehen ist, und von der die Produkte nach dem Zusammenführen einer Weiterverarbeitungseinrichtung wie. z.B. einer Packmaschine zugeführt werden. Dabei ermöglicht die Vorrichtung die Zuführung einer konstanten Menge von Produkten zu der Weiterverarbeitungseinrichtung auch dann, wenn die Herstellungsmengen in der Herstellungseinrichtung schwanken, indem die Mengenschwankungen durch die Zuführung unterschiedlicher Mengen aus dem Speicher ausgeglichen werden, welcher dann regelmäßig nachgefüllt werden muss.

Unter stabförmigen Artikeln werden hier Filterstäbe, Tabakstäbe, fertige Zigaretten, Zigarillos, nichtbrennende Zigaretten oder allgemein Produkte der tabakverarbeitenden Industrie verstanden, soweit sie eine längliche Stabform mit einem in etwa konstanten Durchmesser über die Längserstreckung aufweisen.

Die Produkte werden in den Massenströmen quer zu ihrer Längserstreckung über endlose Transportbänder transportiert. Dabei soll der Transport mit einer möglichst geringen Belastung der Produkte erfolgen, damit die Produkte nicht beschädigt oder verformt werden und die hohen Anforderungen an die Formgenauigkeit eingehalten werden. Ferner soll der Transport der Produkte in den Massenströmen möglichst unter Vermeidung von freien Oberflächen erfolgen, damit die Massenströme nicht durch "Querflieger" gestört werden. Unter dem Begriff "Querflieger" werden solche Produkte verstanden, welche sich aus der Querausrichtung verdrehen und in einem Winkel von ungleich 0 Grad zu den anderen Produkten des Massenstromes ausgerichtet sind, so dass die Packung der Produkte gestört wird.

Die beiden Massenströme werden jeweils durch Förderbänder angetrieben und können durch eine nur durch ihre Schwerkraft oder auch zusätzlich mit einer Feder belastete, bei einem Stop der Förderung des zugeordneten Massenstromes selbsttätig schließende Sperrklappe voneinander getrennt werden. Dabei kann die Sperrklappe neben oder alternativ zu der Feder auch zusätzliche austauschbare Gewichte aufweisen, durch welche die zu überwindende Schließkraft der Sperrklappe eingestellt werden kann. Je nach der Stellung der Sperrklappe werden die Produkte dann nur in einem der beiden Massenströme oder auch durch eine Mischung der beiden Massenströme weiter zu der Weiterverarbeitungseinrichtung transportiert.

Ein besonderes Problem kann beim Schließen der Sperrklappe auftreten, wenn die Sperrklappe nicht vollständig schließt und die Produkte unbeabsichtigt weiter aus beiden Massenströmen zugeführt werden. Dadurch muss der Vorratsspeicher, ohne dass dies eigentlich notwendig wäre, in regelmäßigen Abständen nachgefüllt werden. Dieses Problem kann insbesondere deshalb auftreten, da die Schließkraft der Sperrklappe durch die Bemessung der Gewichte oder der Kraft der Feder individuell auf die Produkte und insbesondere auf das jeweilige Format eingestellt werden muss. Ferner ist es möglich, dass die Produkte beim Schließen der Sperrklappe übermäßig belastet und damit beschädigt werden. Die an die Sperrklappe gestellten Anforderungen einer möglichst geringen Belastung der Produkte bei einem gleichzeitig möglichst sicheren Schließen bilden einen grundsätzlichen Zielkonflikt, welcher zwangsläufig nicht immer optimal zu lösen ist und damit Nachteile hinsichtlich einer der Anforderungen zur Folge haben kann.

Aus der Druckschrift US 2006/0237336A1 ist ferner eine Vorrichtung zum Zusammenführen von zwei Massenströmen von Zigaretten in einer Verpackungsmaschine bekannt, welche zwei Befüllschächte mit jeweils einer ebenen Klappe aufweist. An den Enden der ebenen Klappen ist jeweils ein flexibles Band vorgesehen, welches in jeweils einem Befüllschacht durch eine Anpassung an den Massenstrom einen Hohlraum in Form eines variablen Speichers bildet.

Aus der Druckschrift EP 2 220 950 A2 ist ein Entleermagazin für eine Schargenentleerstation zum Entleeren von mit stabförmigen Produkten gefüllten Schragen sowie eine Einrichtung zum Zusammenführen von Massenströmen insbesondere für ein Entleermagazin bekannt, bei dem ein Förderelement und ein Stromregulierungselement vorgesehen sind, deren Abstand in Abhängigkeit der Durchmesser der Produkte veränderbar ist.

Ferner sind aus den Druckschriften GB 1 407 458 und DE 35 12 521 A1 jeweils selbsthemmende Antriebsmotore oder Getriebe zur Förderung derartiger Produkte bekennt.

Vor diesem Hintergrund liegt der Erfindung die Aufgabe zugrunde, eine Vorrichtung und ein Verfahren bereitzustellen, welche einen verbesserten Transport bzw. eine kontrollierte Trennung der Produkte der Massenströme bei einer gleichzeitig möglichst geringen Belastung der Produkte ermöglichen.

Erfindungsgemäß werden zur Lösung der gestellten Aufgabe eine Vorrichtung mit den Merkmalen von Anspruch 1 und ein Verfahren mit den Merkmalen von Anspruch 6 vorgeschlagen. Weitere bevorzugte Weiterentwicklungen können den Unteransprüchen, den Figuren und der zugehörigen Beschreibung entnommen werden.

Gemäß dem Grundgedanken der Erfindung wird vorgeschlagen, dass der Hohlraum an der Sperrklappe durch eine Krümmung der dem Massenstrom zugewandten Seite der Sperrklappe gebildet ist. Das flexibel und bevorzugt federbelastete Band überspannt die Krümmung der Sperrklappe und kann aufgrund seiner Federbelastung, für den Fall, dass die Produkte des Massenstromes eine zur Überwindung der Spannkraft des Bandes ausreichende Druckkraft auf das Band ausüben, in den durch die Krümmung geschaffenen Hohlraum entweichen.

Gemäß einer bevorzugten Ausführungsform ist das flexible Band auf einer in Aufwickelrichtung federbelasteten Rolle aufwickelbar. Damit kann das Band unterschiedliche Längen aufweisen und sich insbesondere der Formgebung des Hohlraumes bzw. der Oberfläche der darin aufgenommenen Produkte anpassen. Das Band wird gegen die Federkraft von der Rolle abgezogen und dadurch gelängt. Bei nachlassenden, auf das Band einwirkenden Kräften wird dieses selbsttätig wieder über die federbelastete Rolle aufgewickelt und gestrafft, so dass das Band unabhängig von den unterschiedlichen Füllungsgraden des Hohlraumes immer an der Oberfläche der Produkte anliegt. Das Band wird durch die Federkraft praktisch elastisch ausgebildet und liegt dadurch immer mit einer leichten Andruckkraft an der Oberfläche der Produkte an, so dass "Querflieger" in jedem Fall vermieden werden. Außerdem drängt das Band die Produkte aufgrund der Federbelastung beim Öffnen der Sperrklappe aktiv aus dem variablen Speicher zurück in den Massenstrom bzw. in den zum Transport der Produkte vorgesehenen Zuführkanal.

Weiter wird vorgeschlagen, dass eine den Drehwinkel der Rolle detektierende Sensoreinrichtung vorgesehen ist. Durch die Detektierung des Drehwinkels kann indirekt die Auszugslänge des Bandes und dadurch auch der Füllungsgrad des Hohlraumes detektiert werden, da die Drehbewegung der Rolle unmittelbar mit dem Auszug und dem Einzug des Bandes und damit mit der Länge des Bandes zusammenhängt, welche ihrerseits unmittelbar mit dem Füllungsgrad des variablen Speichers zusammenhängt. In Kenntnis des Füllungsgrades kann dann die dem zugehörigen Massenstrom zugeordnete Fördereinrichtung gesteuert werden. Durch die vorgeschlagene Lösung mit dem variablen Speicher muss die Fördereinrichtung nicht schlagartig deaktivert werden, und es können noch geförderte oder auch bereits geförderte noch nachrutschende Produkte in den Speicher entweichen. Damit kann verhindert werden, dass die Produkte trotz des aktiven Schließens der Sperrklappe vor der sich schließenden oder bereits geschlossenen Sperrklappe zu einer höheren Packungsdichte verdichtet werden.

Das Verdichten der Produkte beim Schließen der Sperrklappe kann besonders effektiv verhindert werden, indem der Hohlraum an der dem Massenstrom zugewandten Seite der Sperrklappe angeordnet ist, so dass die Produkte beim Schließen der Sperrklappe praktisch in die Sperrklappe selbst entweichen können.

Weiter wird vorgeschlagen, dass die Krümmung in diesem Fall einen in Transportrichtung des Massenstromes abnehmenden Krümmungsradius aufweist. Durch die vorgeschlagene Lösung steigen die Tiefe und damit die Kapazität des Speichers in Bezug zu der Transportrichtung des Massenstromes an. Ferner werden die Produkte in einer sehr sanften Bewegung ausgehend von der Seite mit dem großen Krümmungsradius in den variablen Speicher eingeführt.

Ferner ist der Antriebsmotor oder ein zwischen dem Antriebsmotor und der Sperrklappe vorgesehenes Getriebe bevorzugt selbsthemmend ausgebildet, so dass die Sperrklappe ihre Stellung auch in der Geschlossenstellung, der Offenstellung oder in einer eingestellten Zwischenstellung beibehält, wenn der Antriebsmotor deaktiviert ist.

Weiter wird zur Lösung der Aufgabe ein Verfahren zum Zusammenführen von zwei Massenströmen aus stabförmigen Artikeln der tabakverarbeitenden Industrie mit wenigstens zwei Zuführkanälen, in denen die Massenströme einer Sammelstelle zugeführt werden, die wenigstens zwei Fördereinrichtungen zum Transport der Produkte der Massenströme zu der Sammelstelle umfassen, und wenigstens einer Sperrklappe, welche die Massenströme in Abhängigkeit von ihrer Stellung trennt oder eine Mischung der Massenströme ermöglicht, vorgeschlagen, wobei wenigstens einer der beiden Zuführkanäle einen variablen Speicher zur Aufnahme von Produkten aus dem Massenstrom aufweist, wobei der variable Speicher durch einen über ein flexibles Band abgedeckten Hohlraum gebildet ist, wobei der Hohlraum an der einem der beiden Massenströme zugewandten Seite der Sperrklappe angeordnet ist, und der Hohlraum an der Sperrklappe durch eine Krümmung der dem Massenstrom zugewandten Seite der Sperrklappe gebildet ist, und das flexible Band durch ein Band gebildet ist, welches auf einer in Aufwickelrichtung federbelasteten Rolle aufwickelbar ist, und eine den Drehwinkel der Rolle detektierende Sensoreinrichtung vorgesehen ist, wobei wenigstens eine der Fördereinrichtungen in Abhängigkeit von dem Signal der Sensoreinrichtung gesteuert wird.

Durch die vorgeschlagene Lösung wird die Fördereinrichtung bewusst dann deaktiviert, wenn sich der Speicher beginnt zu füllen oder wenn ein vorbestimmter Füllungsgrad des Speichers erreicht ist, so dass nachfolgend keine Produkte mehr nachgefördert werden. Damit kann es verhindert werden, dass die Produkte durch einen weiteren Betrieb der Fördereinrichtung vor der sich schließenden Sperrklappe verdichtet werden und dabei verformt werden oder das Schließen der Sperrklappe blockieren.

Die Erfindung wird im Folgenden anhand einer bevorzugten Ausführungsform unter Bezugnahme auf die beigefügten Figuren erläutert. Dabei zeigt
- Fig. 1: eine erfindungsgemäße Vorrichtung mit einer geöffneten Sperrklappe in Schrägdarstellung; und
- Fig. 2: eine erfindungsgemäße Vorrichtung mit einer geschlossenen Sperrklappe in Seitendarstellung; und
- Fig. 3: eine erfindungsgemäße Vorrichtung mit einer geöffneten Sperrklappe in Seitendarstellung; und
- Fig. 4: eine erfindungsgemäße Vorrichtung in Sicht von oben.

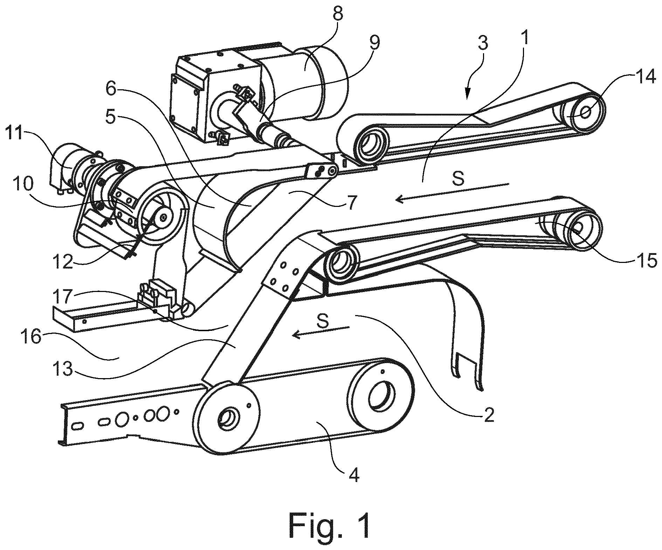

In der Figur 1 ist eine erfindungsgemäße Vorrichtung mit zwei Zuführkanälen 1 und 2 zu erkennen, wobei in den Zuführkanälen 1 und 2 jeweils ein Massenstrom von nicht dargestellten Produkten in einer queraxialen Transportbewegung in Transportrichtung S zuführbar ist. Der Massenstrom aus dem oberen Zuführkanal 1 wird aus einem Vorratsspeicher zugeführt, welcher regelmäßig mit Hilfe von Nachfüllboxen nachgefüllt werden muss. Solche Nachfüllboxen werden bei den Anlagen der Anmelderin auch als "Schragen" bezeichnet. Der Massenstrom in dem unteren Zuführkanal 2 kommt von einer Herstelleinrichtung, in welcher die Produkte kontinuierlich hergestellt werden. Die beiden Massenströme werden aus den Zuführkanälen 1 und 2 zu einer Sammelstelle 17 transportiert und von dort weiter durch einen zentralen Abführkanal 16 weiter zu einer Packmaschine oder zu einer anderweitigen Weiterverarbeitungseinrichtung abtransportiert.

Die Produkte in den Massenströmen werden jeweils mittels einer Fördereinrichtung 3 und 4 in Form von jeweils einem oder zwei Endlosfördermitteln 4, 14 oder 15 wie z.B. Förderketten, Förderbänder oder dergleichen kontinuierlich transportiert. Der obere Massenstrom aus dem oberen Zuführkanal 1 trifft dabei in der Sammelstelle 17 in einem spitzen Winkel von oben auf den in dem unteren Zuführkanal 2 transportierten Massenstrom.

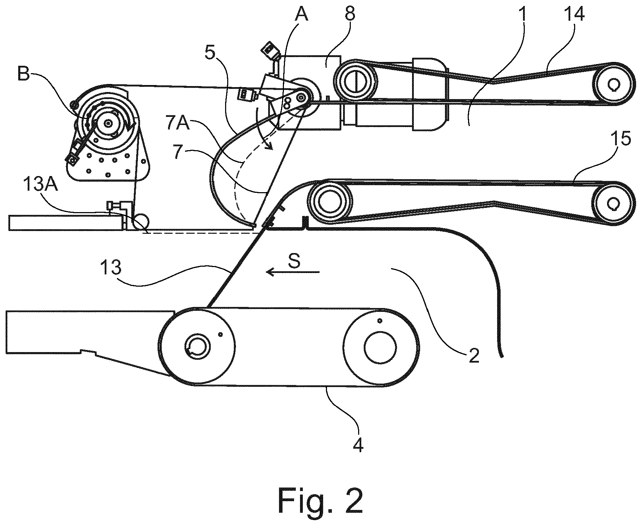

Ferner ist ein einseitig eingespannter, in sich flexibler und in den unteren Zuführkanal 2 hängender Kettenvorhang 13 vorgesehen, welcher in den Anlagen der Anmelderin auch als Kettenhemd bezeichnet wird. Der obere Zuführkanal 1 ist außerdem mittels einer Sperrklappe 5 verschließbar. Damit können die beiden Massenströme aus den Zuführkanälen 1 und 2 wie folgt gesteuert werden. Bei geschlossener Sperrklappe 5 ist die Zuführung der Produkte über den oberen Zuführkanal 1 aus dem Vorratsspeicher blockiert, und die dem oberen Zuführkanal 1 zugeordnete Fördereinrichtung 3 ist deaktiviert. Diese Stellung ist in der Figur 2 zu erkennen. Die Produkte werden in dieser Stellung ausschließlich durch den in dem unteren Zuführkanal 2 von der Fördereinrichtung 4 transportierten Massenstrom zugeführt, wobei der Kettenvorhang 13 von den Produkten in die mit 13A bezeichnete Stellung verdrängt wird und dadurch zusätzlich einen möglichen Restspalt zwischen der Sperrklappe 5 und der gegenüberliegenden Wandung des oberen Zuführkanals 1 verschließt. Dazu ist der Kettenvorhang 13 an der der Sperrklappe 5 gegenüber liegenden Wandung des Zuführkanals 1 oder anders ausgedrückt an der dem Zuführkanal 1 zugewandten Wandung, an einer stromaufwärts zu der Sammelstelle 17 angeordneten Stelle des unteren Zuführkanals 2 befestigt.

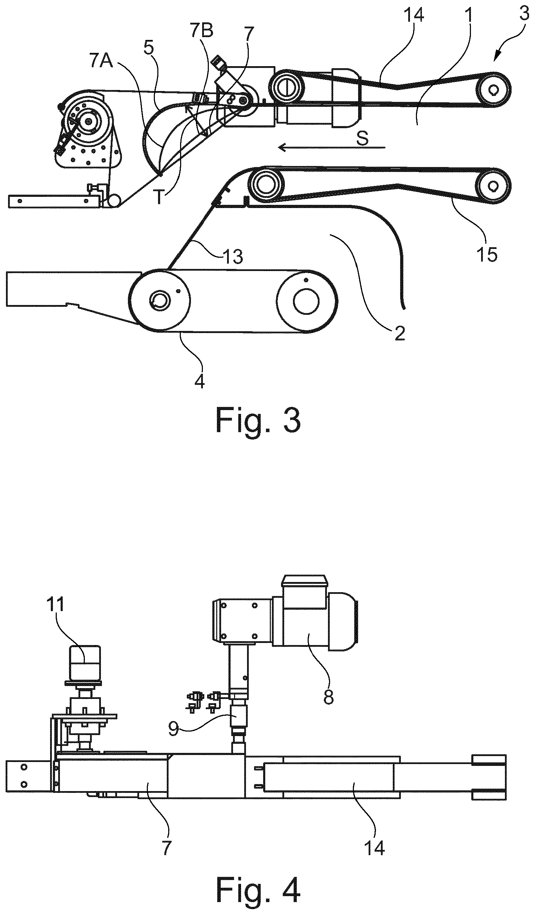

Wenn die Fördereinrichtung 4 des unteren Zuführkanals 2 deaktiviert ist, liegt der Kettenvorhang 13 an der Stirnseite des Massenstromes der Produkte in dem Zuführkanal 2 in der in Figur 3 gezeigten Stellung an und verschließt damit den Zuführkanal 2. Die Sperrklappe 5 ist in der geöffneten Stellung und gibt damit den Übergang von dem oberen Zuführkanal 1 zu der Sammelstelle 17 und in den Abführkanal 16 frei, so dass die Produkte in dieser Stellung der Sperrklappe 5 über die Fördereinrichtung 3 des oberen Zuführkanals 1 aus dem Vorratsspeicher in den Abführkanal 16 und weiter zu der Packmaschine transportiert werden. Für den Fall, dass in dieser Stellung zusätzlich auch die Fördereinrichtung 4 des unteren Zuführkanals 2 aktiviert ist, werden zusätzlich auch Produkte aus dem Zuführkanal 2 unter dem Kettenvorhang 13 hindurch zu der Sammelstelle 17 transportiert. Dadurch werden die Produkte beider Massenströme in dieser Stellung der Sperrklappe 5 und bei der Aktivierung beider Fördereinrichtungen 3 und 4 in der Sammelstelle 17 zusammengeführt und weiter durch den Abführkanal 16 abtransportiert. Hierzu kann die Sperrklappe 5 zusätzlich in eine Zwischenstellung verschwenkt werden, so dass der Austritt des oberen Zuführkanals 1 verengt wird und nur eine geringere Menge von Produkten aus dem oberen Zuführkanal 1 zu der Sammelstelle 17 geführt wird. Grundsätzlich ist das Zusammenführen der Produkte aus den beiden Massenströmen jedoch eher die Ausnahme und findet in der Regel nur beim Umschalten der Zuführung der Produkte aus einem der Zuführkanäle 1 oder 2 zu dem jeweils anderen Zuführkanal 1 oder 2 über eine begrenzte Zeitdauer statt.

Ferner wurde die Fördereinrichtung 4 des Zuführkanals 2 der Zuführung der Produkte von der Herstellanlage soweit verlängert und der Kettenvorhang 13 so ausgelegt, dass die Produkte in dem Zuführkanal 2 bei stehendem Massenstrom nicht mehr an einer darauffolgenden nicht dargestellten Weiterfördereinrichtung wie z.B. einem Kettentrieb anliegen, so dass die Produkte nicht mehr durch eine Aktivierung der Weiterfördereinrichtung trotz der deaktivierten Fördereinrichtung 4 gegen den Kettenvorhang 13 gefördert bzw. aus dem stillstehenden Massenstrom abgefördert werden. Dadurch können die bisher an dieser Stelle entstandenen freien Oberflächen und die dadurch bedingten "Querflieger" vermieden werden.

Die Sperrklappe 5 weist an der dem oberen Zuführkanal 1 und dem aus dem Vorratsspeicher zugeführten Massenstrom zugewandten Seite eine gekrümmte, konkave Formgebung auf und ist mit einem flexiblen Band 7 überspannt, welches an einer Rolle 10 befestigt ist. Die Rolle 10 ist mittels einer Drehfeder 12 in Aufwickelrichtung des Bandes 7 federbelastet, so dass das Band 7 über die Rolle 10 gespannt wird. Die Sperrklappe 5 weist aufgrund ihrer Formgebung und Anordnung einen dem aus dem Zuführkanal 1 zugeführten Massenstrom zugewandten Hohlraum auf, welcher durch das flexible Band 7 abgedeckt wird. Die Produkte des aus dem Zuführkanal 1 zugeführten Massenstromes können beim Schließen der Sperrklappe 5 unter Wölbung und Auszug des flexiblen Bandes 7 in die mit 7A und 7B bezeichneten Stellungen in den Hohlraum der Sperrklappe 5 entweichen, welcher damit einen variablen Speicher 6 bildet. Die Produkte können damit beim Schließen der Sperrklappe 5 und beim Bewegen der Sperrklappe 5 im Allgemeinen in den variablen Speicher 6 entweichen, so dass eine Verdichtung der Produkte vor der Sperrklappe 5 und eine Beschädigung der Produkte vermieden werden kann. Dabei werden die Produkte unabhängig von der Stellung der Sperrklappe 5 vorteilhaft durch das flexible Band 7 abgedeckt, so dass keine "Querflieger" auftreten können. Das flexible Band 7 wird vielmehr durch die federbelastete Rolle 10 gespannt, so dass das Band 7 immer an den Produkten anliegt und die Produkte bei einer nachfolgenden Deaktivierung der Fördereinrichtung 3 und/oder einem Verschwenken der Sperrklappe 5 zurück in die Offenstellung aus dem Speicher 6 wieder zurück in den Massenstrom bzw. in den oberen Zuführkanal 1 drängt.

Das Schließen der Sperrklappe 5 und damit das Stoppen der Zufuhr der Produkte des Massenstromes aus dem Zuführkanal 1 erfolgt dadurch, indem in einem ersten Schritt der Antriebsmotor 8 aktiviert wird und die Sperrklappe 5 in Pfeilrichtung A der Figur 2 in den Massenstrom der Produkte hinein bewegt wird. Dabei werden die Produkte an der Sperrklappe 5 aufgestaut und üben dadurch eine Druckkraft auf das flexible Band 7 aus. Das flexible Band 7 beginnt sich dadurch von der Rolle 10 gegen die Federkraft der Drehfeder 12 abzuwickeln und zu längen, wodurch es sich unter dem Druck der Produkte beginnt in den Hohlraum der Sperrklappe in die mit 7A bezeichnete Stellung zu bewegen und dadurch den variablen Speicher 6 mit Produkten zu füllen. Dadurch kann verhindert werden, dass die Produkte komprimiert und verformt werden oder den Schließvorgang der Sperrklappe 5 blockieren. Der Abzug des Bandes 7 von der Rolle 10 wird dabei durch eine Sensoreinrichtung 11 detektiert, welche daraufhin ein Signal erzeugt, durch welches die Fördereinrichtung 3 angesteuert und deaktiviert wird, welche die in dem von der Sperrklappe 5 blockierten Massenstrom geförderten Produkte fördert. Durch die Abschaltung der Fördereinrichtung 3 wird die weitere Förderung der Produkte idealerweise gestoppt, bevor der Speicher 6 vollständig mit Produkten gefüllt ist. Der variable Speicher 6 dient praktisch zur Aufnahme einer Anzahl von Produkten, welche ab dem Beginn der Schwenkbewegung der Sperrklappe 5 bis zum Stillstand des Massenstromes aufgenommen werden müssen, damit erstens die Schließbewegung der Sperrklappe 5 in jedem Fall vollständig abgeschlossen werden kann, und zweitens die Produkte dabei in den Stauzonen nicht beschädigt und verformt werden.

Ein weiterer Vorteil der erfindungsgemäßen Lösung ist darin zu sehen, dass die Vorrichtung eine formatunabhängige Steuerung der Massenströme ermöglicht, da die Vorrichtung nicht wie bisher durch zusätzliche Gewichte an der Sperrklappe 5 auf das spezielle Format eingestellt werden muss.

Der Hohlraum an der Sperrklappe 5 weist in Transportrichtung S der Produkte eine zunehmende Tiefe T auf, d.h. die Aufnahmekapazität des variablen Speichers 6 steigt in Transportrichtung S an. Dadurch kann das Band 7 mit zunehmendem Schwenkwinkel der Sperrklappe 5 in Richtung der Geschlossenstellung mit einer zunehmenden Tiefe T in den Hohlraum der Sperrklappe 5 verdrängt werden. Da der durch die Produkte auf das Band 7 erzeugte Staudruck mit zunehmendem Schwenkwinkel der Sperrklappe ebenfalls zunimmt, können dadurch mit zunehmendem Winkel der Sperrklappe 5 auch mehr Produkte in den variablen Speicher 6 entweichen, wodurch der zunehmende Staudruck kompensiert werden kann.

Der variable Speicher 6 ist hier durch eine Kombination der Formgebung der Sperrklappe 5 und des darüber gespannten flexiblen Bandes 7 verwirklicht, wobei das variable Speichervolumen des Speichers 6 dadurch bereitgestellt wird, indem das Band 7 in den Hohlraum entweicht und dadurch die vor dem Band 7 befindlichen Produkte unter Ausnutzung des Hohlraumes aus dem Massenstrom entweichen können. Dabei wird immer nur der durch das Entweichen des Bandes 7 freigegebene Teil des Hohlraumes der Sperrklappe 5 mit Produkten gefüllt, so dass es sich hier um einen Speicher 6 mit einem variablen Füllvolumen für die Produkte handelt, welcher durch das anliegende Band 7 bewusst keine freie Oberfläche für die Produkte aufweist. Das Band 7 liegt vielmehr ständig an den Produkten an, so dass "Querflieger" vermieden werden, in dem Massenstrom eine bestimmte Packungsdichte aufrechterhalten bleibt und die Produkte schließlich beim Öffnen der Sperrklappe 5 von dem Band 7 wieder zurück in den Massenstrom bzw. in den Zuführkanal 1 gedrängt werden.

Das Band 7 ist flexibel ausgebildet, so dass es sich dem Verlauf der Oberfläche der Produkte anpassen kann. Ferner ist das Band 7 durch das Aufwickeln auf der federbelasteten Rolle 10 elastisch ausgebildet, so dass es sich unter dem Druck der Produkte längen kann. Alternativ wäre es auch denkbar, ein flexibles, in sich elastisches Band 7 wie. z.B. ein Gummiband mit einer definierten Elastizität zu verwenden.

Der Kern der vorliegenden Erfindung ist in der Kombination der antreibbaren Sperrklappe 5 mit dem variablen Speicher 6 beschrieben worden. Es ist jedoch ersichtlich, dass die Vorrichtung auch durch die beschriebenen Merkmale alleine oder durch eine anderweitige Kombination der Merkmale vorteilhaft weiterentwickelt werden kann.

## Patentansprüche

1. Vorrichtung zum Zusammenführen von wenigstens zwei Massenströmen aus stabförmigen Produkten der tabakverarbeitenden Industrie mit
- wenigstens zwei Zuführkanälen (1,2), in denen die Massenströme einer Sammelstelle (17) zugeführt werden, die
- wenigstens zwei Fördereinrichtungen (3,4) zum Transport der Produkte der Massenströme zu der Sammelstelle (17) umfassen, sowie
- wenigstens einer Sperrklappe (5), welche ein Zuführen eines Massenstromes in Abhängigkeit von ihrer Stellung trennt oder eine Mischung der Massenströme ermöglicht, wobei
- die Sperrklappe (5) mittels eines Antriebsmotors (8) zwischen einer Offenstellung und einer Geschlossenstellung und umgekehrt antreibbar ist, und
- wenigstens einer der beiden Zuführkanäle einen variablen Speicher (6) zur Aufnahme von Produkten aus dem Massenstrom aufweist, wobei
- der variable Speicher (6) durch einen über ein flexibles Band (7) abgedeckten Hohlraum gebildet ist, und
- der Hohlraum an der dem Massenstrom zugewandten Seite der Sperrklappe (5) angeordnet ist,
**dadurch gekennzeichnet, dass**
- der Hohlraum an der Sperrklappe (5) durch eine Krümmung der dem Massenstrom zugewandten Seite der Sperrklappe (5) gebildet ist.

2. Vorrichtung nach Anspruch 1, **dadurch gekennzeichnet, dass**
- das flexible Band (7) auf einer in Aufwickelrichtung federbelasteten Rolle (10) aufwickelbar ist.

3. Vorrichtung nach Anspruch 2, **dadurch gekennzeichnet, dass**
- eine den Drehwinkel der Rolle (10) detektierende Sensoreinrichtung (11) vorgesehen ist.

4. Vorrichtung nach einem der Ansprüche 1 bis 3, **dadurch gekennzeichnet, dass**
- die Krümmung einen in Transportrichtung des Massenstromes abnehmenden Krümmungsradius aufweist.

5. Vorrichtung nach einem der vorangegangenen Ansprüche,
**dadurch gekennzeichnet, dass**
- der Antriebsmotor (8) oder ein zwischen dem Antriebsmotor (8) und der Sperrklappe (5) vorgesehenes Getriebe selbsthemmend ausgebildet ist.

6. Verfahren zum Zusammenführen von zwei Massenströmen aus stabförmigen Artikeln der tabakverarbeitenden Industrie mit
- wenigstens zwei Zuführkanälen (1,2), in denen die Massenströme einer Sammelstelle (17) zugeführt werden, die
- wenigstens zwei Fördereinrichtungen (3,4) zum Transport der Produkte der Massenströme zu der Sammelstelle (17) umfassen, und
- wenigstens einer Sperrklappe (5), welche ein Zuführen eines Massenstromes in Abhängigkeit von ihrer Stellung trennt oder eine Mischung der Massenströme ermöglicht,
**dadurch gekennzeichnet, dass**
- wenigstens einer der beiden Zuführkanäle (1,2) einen variablen Speicher (6) zur Aufnahme von Produkten aus dem Massenstrom aufweist, wobei
- der variable Speicher (6) durch einen über ein flexibles Band (7) abgedeckten Hohlraum gebildet ist, wobei
- der Hohlraum an der einem der beiden Massenströme zugewandten Seite der Sperrklappe (5) angeordnet ist, und
- der Hohlraum an der Sperrklappe (5) durch eine Krümmung der dem Massenstrom zugewandten Seite der Sperrklappe (5) gebildet ist, wobei
- das flexible Band auf einer in Aufwickelrichtung federbelasteten Rolle (10) aufwickelbar ist, und
- eine den Drehwinkel der Rolle (10) detektierende Sensoreinrichtung (11) vorgesehen ist, und
- wenigstens eine der Fördereinrichtungen (3,4) in Abhängigkeit von dem Signal der Sensoreinrichtung (11) gesteuert wird.

7. Verfahren nach Anspruch 6, **dadurch gekennzeichnet, dass**
- die Fördereinrichtung (3) angesteuert wird, welche den auf die Sperrklappe (5) zugeführten Massenstrom fördert.

## Claims

1. Device for merging at least two mass flows of rod-shaped products from the tobacco processing industry, comprising:
- at least two supply channels (1, 2), in which the mass flows are supplied to a collection point (17) and which
- comprise at least two conveyor devices (3, 4) for transporting the products of the mass flows to the collection point (17), and
- at least one blocking flap (5) which, depending on its position, interrupts the supply of a mass flow or allows the mass flows to be mixed,
- it being possible for the blocking flap (5) to be driven between an open position and a closed position, and vice versa, by means of a drive motor (8), and
- at least one of the two supply channels having a variable storage means (6) for receiving products from the mass flow,
- the variable storage means (6) being formed by a cavity covered by a flexible strip (7), and
- the cavity being arranged on the side of the blocking flap (5) facing the mass flow,
**characterised in that**
- the cavity on the blocking flap (5) is formed by a curvature of the side of the blocking flap (5) facing the mass flow.

2. Device according to claim 1, **characterised in that**
- the flexible strip (7) can be wound onto a roller (10) which is spring-loaded in the winding direction.

3. Device according to claim 2, **characterised in that**
- a sensor device (11) is provided which detects the angle of rotation of the roller (10).

4. Device according to any of claims 1 to 3, **characterised in that**
- the curvature has a radius of curvature that decreases in the direction of transport of the mass flow.

5. Device according to any of the preceding claims, **characterised in that**
- the drive motor (8) or a transmission provided between the drive motor (8) and the blocking flap (5) is designed to be self-locking.

6. Method for merging two mass flows of rod-shaped articles from the tobacco processing industry, comprising:
- at least two supply channels (1, 2), in which the mass flows are supplied to a collection point (17) and which
- comprise at least two conveyor devices (3, 4) for transporting the products of the mass flows to the collection point (17), and
- at least one blocking flap (5) which, depending on its position, interrupts the supply of a mass flow or allows the mass flows to be mixed,
**characterised in that**
- at least one of the two supply channels (1, 2) has a variable storage means (6) for receiving products from the mass flow,
- the variable storage means (6) being formed by a cavity covered by a flexible strip (7),
- the cavity being arranged on the side of the blocking flap (5) facing the two mass flows, and
- the cavity on the blocking flap (5) is formed by a curvature of the side of the blocking flap (5) facing the mass flow,
- it being possible to wind the flexible strip onto a roller (10) which is spring-loaded in the winding direction, and
- a sensor device (11) is provided which detects the angle of rotation of the roller (10), and
- at least one of the conveyor devices (3, 4) is controlled on the basis of the signal from the sensor device (11).

7. Method according to claim 6, **characterised in that**
- the conveyor device (3) is activated, which conveys the mass flow fed to the blocking flap (5).

## Revendications

1. Dispositif pour réunir au moins deux flux massiques de produits en forme de bâtonnet de l'industrie de traitement du tabac, comportant
- au moins deux canaux d'amenée (1, 2) dans lesquels les flux massiques sont amenés à un point de rassemblement (17), qui comprennent
- au moins deux moyens de transport (3, 4) pour transporter les produits des flux massiques vers le point de rassemblement (17) et
- au moins un volet d'arrêt (5) qui, en fonction de sa position, sépare une amenée d'un flux massique ou permet un mélange des flux massiques, dans lequel
- le volet d'arrêt (5) peut être entraîné au moyen d'un moteur d'entraînement (8) entre une position ouverte et une position fermée et vice versa, et
- au moins un des deux canaux d'amenée présente un espace de stockage variable (6) pour recevoir des produits du flux massique, dans lequel
- l'espace de stockage variable (6) est formé par une cavité couverte par une bande flexible (7) et
- la cavité est disposée du côté du volet d'arrêt (5) tourné vers le flux massique,
**caractérisé en ce**
- **que** la cavité au niveau du volet d'arrêt (5) est formée par une courbure du côté du volet d'arrêt (5) tourné vers le flux massique.

2. Dispositif selon la revendication 1, **caractérisé en ce**
- **que** la bande flexible (7) peut être enroulée sur un rouleau (10) chargé par ressort dans le sens d'enroulement.

3. Dispositif selon la revendication 2, **caractérisé en ce**
- **qu'**un moyen de détection (11) détectant l'angle de rotation du rouleau (10) est prévu.

4. Dispositif selon l'une des revendications 1 à 3, **caractérisé en ce**
- **que** la courbure présente un rayon de courbure qui diminue dans la direction de transport du flux massique.

5. Dispositif selon l'une des revendications précédentes, **caractérisé en ce**
- **que** le moteur d'entraînement (8) ou un réducteur prévu entre le moteur d'entraînement (8) et le volet d'arrêt (5) est conçu autobloquant.

6. Procédé pour réunir deux flux massique d'articles en forme de bâtonnet de l'industrie de traitement du tabac, comportant
- au moins deux canaux d'amenée (1, 2) dans lesquels les flux massiques sont amenés à un point de rassemblement (17), qui comprennent
- au moins deux moyens de transport (3, 4) pour transporter les produits des flux massique vers le point de rassemblement (17) et
- au moins un volet d'arrêt (5) qui, en fonction de sa position, sépare une amenée d'un flux massique ou permet le mélange des flux massiques,
**caractérisé en ce**
- **qu'**au moins un des deux canaux d'amenée (1, 2) présente un espace de stockage variable (6) pour recevoir des produits du flux massique, dans lequel
- l'espace de stockage variable (6) est formé par une cavité couverte par une bande flexible (7), dans lequel
- la cavité est disposée du côté du volet d'arrêt (5) tourné vers l'un des deux flux massique et
- la cavité est formée au niveau du volet d'arrêt (5) par une courbure du côté du volet d'arrêt (5) tourné vers le flux massique, dans lequel
- la bande flexible peut être enroulée sur un rouleau (10) chargé par ressort dans le sens d'enroulement, et
- un moyen de détection (11) détectant l'angle de rotation du rouleau (10) est prévu, et
- au moins un des moyens de transport (3, 4) est commandé en fonction du signal du moyen de détection (11).

7. Procédé selon la revendication 6, **caractérisé en ce**
- **que** le moyen de transport (3) qui transporte le flux massique amené au volet d'arrêt (5) est activé.
